# FASCICULE DE BREVET EUROPEEN

(11) **EP 4 101 700 B1**
(45) Date de publication et mention de la délivrance du brevet: **24.07.2024**
(21) Numéro de dépôt: 22171485.0
(22) Date de dépôt: 03.05.2022
(51) Int. Cl.: B60R 7/04, B60N 2/75, B60R 13/02, B29C 63/04, B29C 63/00

(54) **PROCÉDÉ DE REVÊTEMENT D'UNE PIÈCE D'HABITACLE D'UN VÉHICULE AUTOMOBILE**
VERFAHREN ZUR VERKLEIDUNG EINES FAHRZEUGINNENRAUMTEILS EINES KRAFTFAHRZEUGS
METHOD FOR COATING A PASSENGER COMPARTMENT PART OF A MOTOR VEHICLE

(30) Priorité: 10.06.2021 FR 2106147
(43) Date de publication de la demande: 14.12.2022
(73) Titulaire: Eurostyle Systems Tech Center France, 36000 Châteauroux (FR)
(72) Inventeur: BEAUJARD, Serge Joël, 36400 LA CHATRE (FR)
(74) Mandataire: Berger, Helmut

(56) Documents cités:
- EP-A1- 0 495 292
- EP-A1- 2 194 107
- EP-A2- 2 441 578
- FR-A1- 2 792 271
- GB-A- 2 229 673
- JP-A- H11 291 356
- KR-B1- 102 036 129
- KR-B1- 102 036 132
- US-B1- 9 969 338

## Description

L'invention porte sur la fabrication d'un élément d'habitacle de véhicule, en l'occurrence un couvercle, et plus précisément un couvercle de vide-poche intégré dans un accoudoir central placé entre deux places avant du véhicule. Ce couvercle peut être bombé voire fortement bombé, et est constitué d'une structure rigide revêtue d'une nappe de matériau de finition, avec souvent l'interposition d'un rembourrage comme de la mousse. Le matériau de finition peut être un textile ou un textile enduit de plastique reproduisant l'aspect du cuir.

L'invention a ainsi aussi trait aux revêtements de l'habitacle d'un véhicule automobile, et à un procédé de revêtement d'une pièce d'habitacle d'un véhicule automobile. Le revêtement peut donc être en cuir artificiel ou encore en tissus améliorant l'esthétique de l'habitacle et permettant une personnalisation de celui-ci.

On connait des structures dans lesquelles la nappe du matériau de finition est constituée d'un assemblage de pièces cousues les unes aux autres, pour notamment prendre en compte l'aspect tridimensionnel de la structure à revêtir et constituer un étui adapté au plus près pour la structure. On connait aussi des structures dans lesquelles la nappe est enserrée avec un lien coulissant sur un col de la structure rigide, pour être plaquée au plus près de celle-ci. Dans ce cas le revêtement semble être solidarisé en tension sur la pièce rigide à revêtir. Lorsque la pièce rigide comprend des parties bombées cette mise sous tension du revêtement sur la pièce est une opération délicate.

Lorsque cette mise sous tension n'est pas parfaitement exécutée, le revêtement peut former des plis voire même se détacher de la pièce sur laquelle le revêtement est solidarisé.

Le document US9969338B1 divulgue un composant intérieur.
Le document KR102036129 divulgue une méthode de fabrication.
Un objectif de l'invention est de proposer un procédé de revêtement d'une pièce d'habitacle d'un véhicule automobile améliorant le maintien du revêtement sur la pièce, même si la pièce est bombée, ce qui réduit le risque de formation de plis et réduit le temps de l'opération.

Au final, on manque en particulier de solutions pour mettre en place une nappe sans couture sur une structure sans col. Il est souhaitable de disposer de méthodes offrant une grande répétabilité d'un exemplaire produit à un autre, ainsi qu'en cas de changement d'opérateur entre deux séries. Les méthodes devraient idéalement être largement automatisées, et offrir finalement une productivité horaire élevée avec un niveau de qualité garanti.

A cet effet, il est proposé un procédé de couverture d'un élément d'habitacle automobile à deux faces, selon la revendication 1, le procédé comprenant une fixation de l'élément d'habitacle à une première partie d'une presse, une disposition d'une pièce de revêtement sur une deuxième partie de la presse, et un pressage d'une première face de l'élément d'habitacle et de la pièce de revêtement l'un contre l'autre, le procédé comprenant, lors du pressage, une mise sous tension de la pièce de revêtement sur la première face par une lèvre de la deuxième partie de la presse, puis une immobilisation de la pièce de revêtement vis-à-vis de l'élément d'habitacle par application du contour de la pièce de revêtement sur un adhésif porté par la deuxième face de la pièce.

Ces principes permettent d'homogénéiser et de rendre répétable la mise en tension du revêtement sur le couvercle, ou l'élément d'habitacle visé. Il n'y a notamment pas d'ondulations dans le revêtement. Il y a aussi un gain de temps vis-à-vis d'un système sans outillage. L'immobilisation peut être corrigée si elle a été faite au mauvais endroit.

Diverses caractéristiques supplémentaires, optionnelles, peuvent être prévues, seules ou en combinaison :
- le revêtement est un textile ou un tissu enduit de plastique.
- l'adhésif est porté par la périphérie de la deuxième face de la pièce.
- l'immobilisation de la pièce de revêtement vis-à-vis de l'élément d'habitacle est poursuivie par l'application de points de soudure à ultrasons, ou l'application de points de colle, avant laquelle la pièce de revêtement peut être repositionnée par décollage et recollage.
- la lèvre peut être élastique, car constituée d'un matériau élastique, et plus particulièrement peut être en polyuréthane ou en caoutchouc.
- Le procédé comprend, avant le pressage, une mise en place d'une mousse ou d'un tissu tridimensionnel entre la première face de la pièce et la pièce de revêtement.
- Le procédé comprend une formation d'une cuvette formant un creux dans la première face de la pièce, la cuvette présentant une profondeur inférieure à une épaisseur de la mousse, pour loger la mousse.
- Le procédé comprend une formation d'une nervure en saillie de la première face de la pièce, la nervure étant disposée au niveau d'un changement de courbure de la première face, aux fins de délimiter l'emplacement de la mousse.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
[Fig. 1] - la figure 1 est une vue de dessous d'un couvercle d'accoudoir tel que prévu d'être traité par le procédé selon l'invention ;
[Fig. 2] - la figure 2 est une vue schématique d'une presse pour revêtir une pièce ;
[Fig. 3] - La figure 3 est une vue schématique de la partie de réception du vérin de la presse sans le revêtement ;
[Fig. 4] - la figure 4 est une vue schématique en section d'un premier mode de réalisation d'une pièce revêtue selon l'invention ;
[Fig. 5] - la figure 5 est une vue schématique en section d'un deuxième mode de réalisation d'une pièce revêtue selon l'invention ;
[Fig. 6] - la figure 6 est une vue schématique de dessus du deuxième mode de réalisation de la pièce revêtue ;
[Fig. 7] - la figure 7 est une vue schématique en section d'un troisième mode de réalisation d'une pièce prête à être revêtue selon l'invention ;
[Fig. 8] - la figure 8 est une vue schématique en perspective du troisième mode de réalisation de la pièce prête à être revêtue ;
[Fig. 9] - la figure 9 est une vue schématique de dessus du troisième mode de réalisation de la pièce prête à être revêtue et d'une mousse découpée avant revêtement de la pièce ;
[Fig. 10] - la figure 10 est une vue schématique du troisième mode de réalisation de la pièce sur laquelle est disposée la mousse, la pièce étant prête à être revêtue.

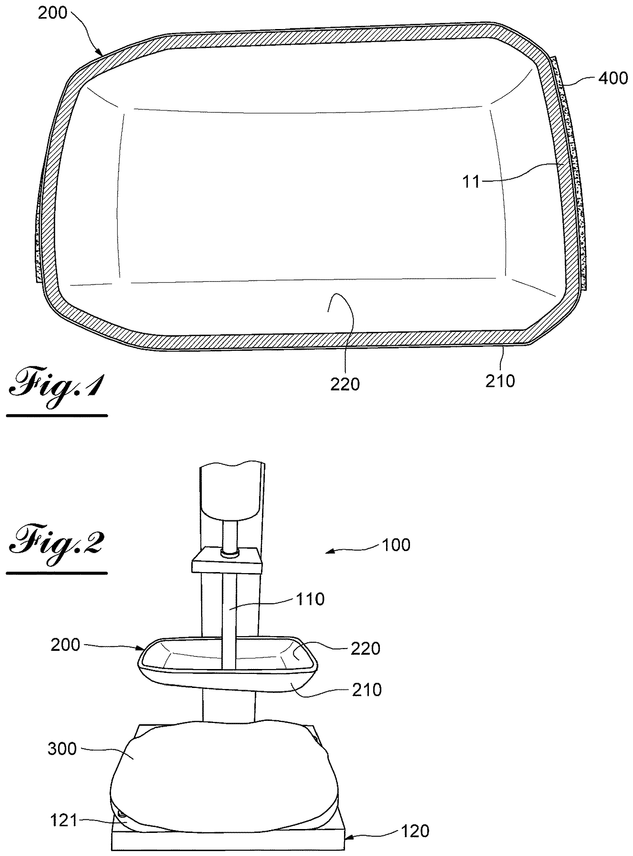

La figure 1 montre une pièce d'habitacle de véhicule automobile 200, en l'occurrence un couvercle de vide-poche d'accoudoir central, qui est une pièce s'étendant essentiellement dans deux dimensions, et globalement rectangulaire, destinée à être articulée sur un caisson d'accoudoir, par une charnière à l'un de ses petits côtés. La pièce est homogène sur son épaisseur, qui est constituée d'une matière polymère, moulée.

La vue de la figure 1 montre la face interne 220 du couvercle. On visualise le fait que ce couvercle est bombé vers le haut (donc vers l'arrière de la vue), et que sa face externe 210 (en arrière), porte une mousse 400 ou un tissu tridimensionnel qui dépasse aux deux petites extrémités. La périphérie de la face interne 220 porte quant à elle un autocollant ou adhésif double-face 11, qui est une bande continue, de largeur par exemple 10 mm, d'un film encollé sur ses deux faces (disponible commercialement sous forme de rouleau, par exemple), déposé préalablement par l'intermédiaire de sa première face et protégé sur sa deuxième face par une feuille de revêtement à peler.

C'est la face externe 210 qui va être revêtue selon l'invention d'une nappe.

La figure 2 représente une presse 100 comprenant un vérin 110 et un socle 120 de réception du vérin 110.

Sur la figure 2 la pièce 200 à revêtir est fixée au vérin 110 et le revêtement 300 prévu pour la pièce 200 est disposé, par exemple à plat, sur le socle 120 de la presse 100.

La pièce 200 à revêtir est essentiellement rigide. Elle présente une forme spécifique dont l'esthétique et l'ergonomie correspondent à l'utilisation prévue pour la pièce 200.

Comme mentionné en relation avec la figure 1, la pièce 200 comprend une face 210 externe convexe. La convexité de la face 210 externe n'est pas uniforme. La pièce 200 comprend de plus une face 220 interne concave.

Selon le mode de réalisation représenté, le revêtement 300 est une nappe souple qui présente, dans son état étalé, une forme sensiblement rectangulaire dont les angles sont arrondis.

Le revêtement 300 est par exemple du cuir artificiel, du tissu enduit de plastique (TEP), ou encore du tissu. Le revêtement 300 comprend par exemple de l'intissé.

Un pressage de la pièce 200 contre le revêtement 300 grâce à la presse 100 est prévu pour que le revêtement 300 épouse la forme de la pièce 200.

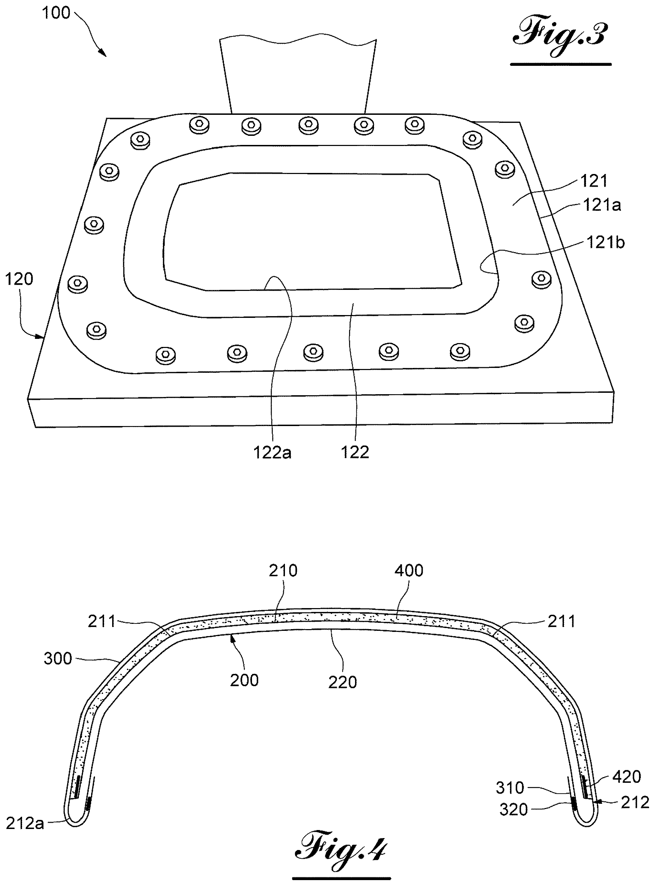

La figure 3 représente le socle 120 de la presse 100 sur lequel est disposé le revêtement 300, sans le revêtement 300 sur la vue. Le socle comprend une couronne 121 rigide, amovible, et une lèvre 122 attachée à la couronne 121.

La couronne 121 est amovible vis-à-vis du socle 120, ce qui permet en fin de processus une finition de la pose du revêtement 300 sur la pièce 200 en dehors de la presse 100. La couronne 121 présente une forme annulaire généralement oblongue, délimitée par une périphérie 121a extérieure et par une périphérie 121b intérieure.

La forme de la périphérie 121a extérieure de la couronne 121 est globalement similaire à la forme du revêtement 300 disposé dessus de sorte à faciliter le positionnement du revêtement 300 pour un bon alignement avec la pièce 200. La forme de la périphérie 121b intérieure de la couronne 121 est définie afin de permettre que le revêtement 300 épouse le plus possible la forme de la pièce 200 lors du pressage.

La lèvre 122 est solidaire de la périphérie 121b intérieure de la couronne 121. La lèvre 122 présente une forme annulaire généralement oblongue permettant à un sommet de la pièce 200 de la dépasser, en la traversant en son intérieur.

La couronne 121 et la lèvre 122 sont disposées sensiblement dans un même plan. Un périmètre 122a intérieur définissant la forme annulaire de la lèvre 122 est sensiblement parallèle à la périphérie 121b intérieure de la couronne 121.

La lèvre 122 est par exemple réalisée en caoutchouc ou encore en polyuréthane.

Si le revêtement 300 est en TEP, un chauffage du revêtement 300 permet de l'assouplir préalablement (avant l'application de la presse) pour limiter le risque de plis sur la pièce 200. Le chauffage est par exemple réalisé avec une rampe infrarouge.

Comme visible en figure 4, selon un mode de réalisation, une mousse 400 est disposée entre la pièce 200 et le revêtement 300, ce qui augmente le confort lors du touché de la pièce 200 une fois revêtue.

La mousse 400 est par exemple maintenue sur la pièce 200 avant pressage. Selon un mode de réalisation la mousse est maintenue par un adhésif 420 double face.

La mousse 400 est de préférence utilisée uniquement dans les zones de la pièce 200 ayant de faibles courbures afin de limiter le risque de plis et d'ondulation du revêtement 300. Cette limitation de l'utilisation de la mousse est également avantageuse lorsque la pièce 200 présente une forme peu symétrique.

Suite au pressage de la pièce 200 contre le revêtement 300, qui met le revêtement en tension de manière uniforme et automatisé, donc maitrisée et reproductible d'un exemplaire à l'autre, le procédé comprend un repli du bord 310 du revêtement 300, qui dépasse de la face externe 210 contre la face 220 interne de la pièce 200. Ce repli est fait typiquement à la main par un opérateur. Il s'agit d'une opération connue sous le nom de rembordement.

Selon l'invention, le procédé comprend alors le maintien du bord 310 rembordé du revêtement 300 à la face 220 interne. Ce maintien est fait grâce à un adhésif 320 double-face appliqué manuellement.

A ce stade, la couronne 121 amovible est retirée de la presse, et la pièce 200 est poussée à travers la couronne 121 pour achever de la traverser, tout en poursuivant le mouvement initial qui avait mis le revêtement en tension.

Puis si des plis du bord 310 doivent être repris, ils le sont à la main à ce stade, jusqu'à ce qu'un positionnement satisfaisant soit obtenu, ce qui est fait aisément grâce à l'utilisation de la membrane élastique et de l'adhésif double-face.

Puis éventuellement, au surplus, il y a application d'une couture et/ou d'une soudure, comme une soudure à ultrasons, sur toute la périphérie, pour solidariser encore plus solidement le revêtement sur la face interne.

La figure 4 est ainsi une vue en section d'un premier mode de réalisation de la pièce 200 revêtue. Dans ce mode de réalisation la pièce 200 comprend, sur sa face 210 externe au niveau de la limite entre la face 210 externe et la face 220 interne, un trottoir 212 périphérique. Ce trottoir 212 forme une excroissance sur la face 210 externe grâce à laquelle est disposée la mousse 400 sur la pièce. Ce trottoir 212 comprend, au niveau de la limite entre la face 210 externe et la face 220 interne, un arrondi 212a.

Le trottoir 212 est de préférence disposé sur toute la périphérie de la pièce 200.

Selon le mode de réalisation illustré, qui n'est qu'un exemple, le trottoir 212 est en saillie d'un millimètre par rapport à la face 220 interne et la mousse 400 a une épaisseur de trois millimètres.

Le trottoir 212 améliore la finition esthétique de la pose du revêtement 300 en formant un pli rectiligne au niveau du ou des bords 310 rembordés du revêtement 300.

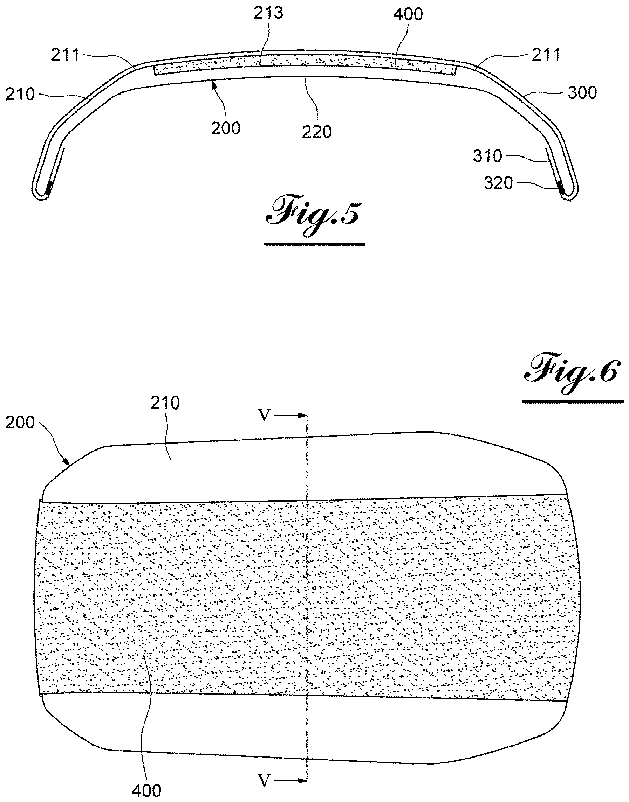

Les figures 5 et 6 sont des vues en section et de dessus d'un deuxième mode de réalisation de la pièce 200. Sur la figure 6 le revêtement 300 n'est pas représenté afin de permettre de voir la mousse 400.

Dans ce mode de réalisation la pièce 200 comprend une cuvette 213 disposée entre deux lignes de changements 211 de courbure de la face 210 externe. La cuvette 213 est configurée pour recevoir la mousse 400.

La cuvette 213 permet de rendre plus apparent les changements de courbure définis par la pièce 200 tout en conservant un certain confort pour l'utilisateur grâce à la mousse 400.

Selon le mode de réalisation représenté la cuvette 213 s'étend sur toute une longueur de la pièce 200. La cuvette présente, par exemple, une profondeur de 3 millimètres pour une mousse d'épaisseur 3,5 millimètres.

Selon un mode de réalisation, la cuvette 213 se termine par un trottoir du type du trottoir 212 défini en figure 4 mais seulement, dans ce cas, au niveau de l'avant et/ou de l'arrière de la pièce 200, c'est-à-dire aux deux extrémités de la longueur.

La figure 6 mentionne par ailleurs le plan V-V suivant lequel la section illustrée sur la figure 5 est réalisé.

La section illustrée sur la figure 4 est réalisée sensiblement au même niveau que celle de la figure 5 mais sur le premier mode de réalisation de la pièce 200, commenté plus haut.

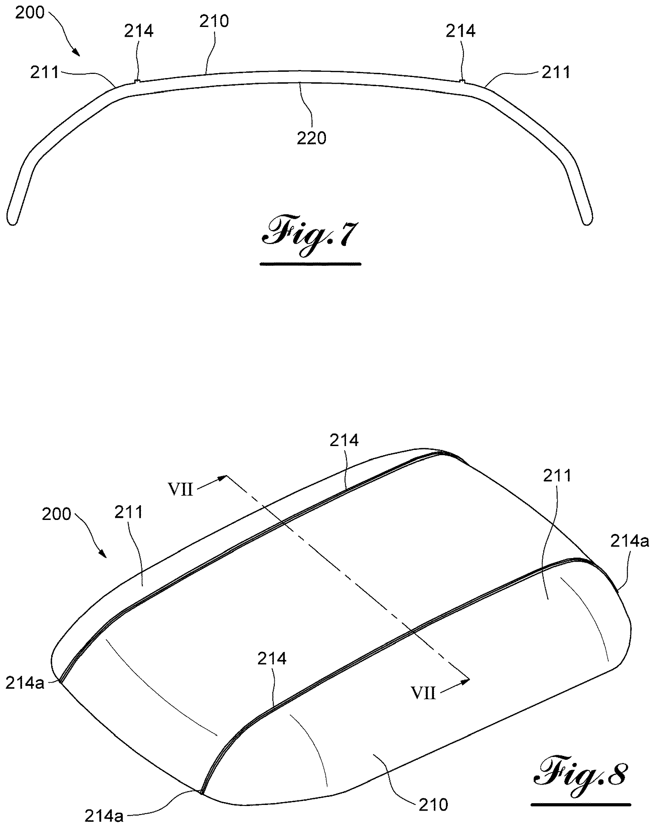

Les figures 6 et 7 représentent un troisième mode de réalisation de la pièce 200 respectivement en section et en perspective. Sur ces figures seule la pièce 200 est représentée.

La figure 8 mentionne le plan VII-VII suivant lequel la section illustrée sur la figure 7 est réalisé.

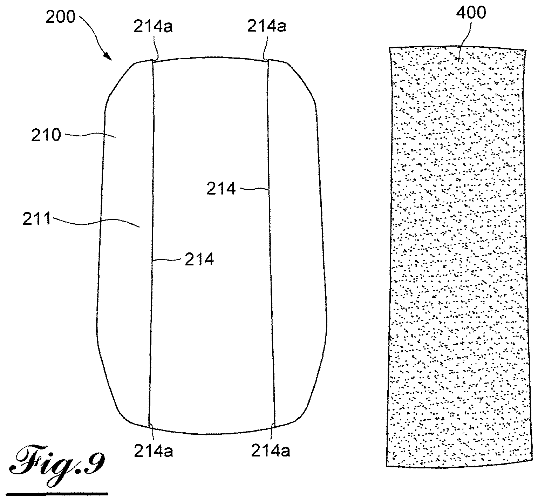

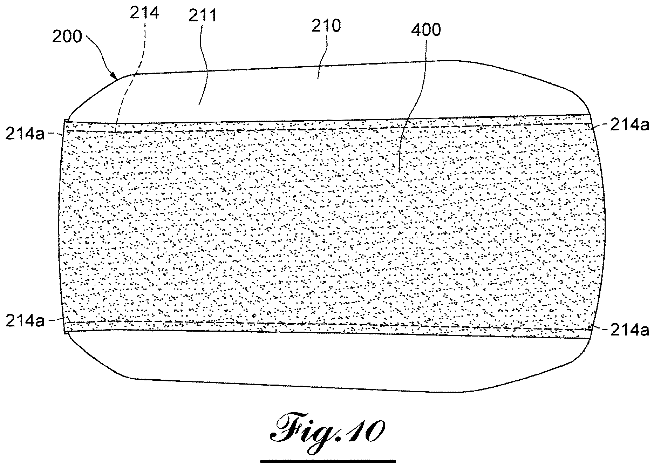

Les figures 8 et 9 représentent le troisième mode de réalisation de la pièce 200 de dessus. Sur la figure 9 la mousse 400 est représentée à plat, à côté de la pièce 200. Sur la figure 10 le revêtement 300 n'est pas représenté afin de permettre de voir la mousse 400.

Dans ce mode de réalisation la pièce 200 comprend deux nervures 214 disposées chacune à proximité d'une droite 211 de changement de convexité de la face 210 externe.

De telles nervures 214 permettent de centrer la mousse 400 sur une zone délimitée par ces nervures 214 lors de la disposition de la mousse 400 sur la pièce 200, la mousse 400 étant prédécoupée en fonction.

Les nervures 214 sont en saillie par exemple de 1 millimètre de la face 210 externe.

Des extrémités 214a des nervures 214 font saillie de 3 millimètres de la face 210 externe. Ainsi, l'épaisseur de la mousse 400 est noyée dans les nervures 214 afin d'éviter des ondulations du revêtement 300.

Selon un mode de réalisation, la mousse 400 passe par-dessus au moins une des nervures 214 afin d'atténuer le changement d'épaisseur sous le revêtement 300 après la mousse 400.

La mousse 400 est ainsi par exemple décalée de 3, 4 ou 5 millimètres par rapport à la nervure 214.

Selon l'invention, les différents modes de réalisation décrits ci-dessus peuvent être combinés de quelque façon que ce soit.

Un tel procédé de revêtement de la pièce 200 permet d'homogénéiser la fabrication en série d'une pièce 200 revêtue tout en limitant le risque d'ondulations ou de plis du revêtement 300 sur la pièce 200.

Un tel procédé permet également de moins lier le résultat esthétique du revêtement à la dextérité d'un opérateur.

## Revendications

1. Procédé de couverture d'un élément d'habitacle automobile (200) à deux faces, comprenant une fixation de l'élément d'habitacle (200) à une première partie (110) d'une presse (100), une disposition d'une pièce de revêtement (300) sur une deuxième partie (120) de la presse (100), et un pressage d'une première face (210) de l'élément d'habitacle (200) et de la pièce de revêtement (300) l'un contre l'autre, le procédé étant **caractérisé en ce qu'**il comprend, lors du pressage, une mise sous tension de la pièce de revêtement (300) sur la première face par une lèvre (122) de la deuxième partie (120) de la presse, et une immobilisation de la pièce de revêtement vis-à-vis de l'élément d'habitacle par application du contour de la pièce de revêtement sur un adhésif porté par la deuxième face de la pièce, la lèvre (122) présentant une forme annulaire généralement oblongue permettant à un sommet de l'élément d'habitacle (200) de la dépasser, en la traversant en son intérieur.

2. Procédé de couverture selon la revendication 1, **caractérisé en ce que** le revêtement est un textile ou un tissu enduit de plastique.

3. Procédé de couverture selon la revendication 1 ou 2, **caractérisé en ce que** l'adhésif est porté par la périphérie de la deuxième face de la pièce.

4. Procédé de couverture selon l'une des revendications 1 à 3, **caractérisé en ce que** l'immobilisation de la pièce de revêtement vis-à-vis de l'élément d'habitacle est poursuivie par l'application de points de soudure à ultrasons ou l'application de points de colle, avant laquelle la pièce de revêtement peut être repositionnée par décollage et recollage.

5. Procédé de couverture selon l'une des revendications 1 à 4, **caractérisé en ce que** la lèvre est en polyuréthane ou en caoutchouc.

6. Procédé de couverture selon l'une des revendications 1 à 5, **caractérisé en ce qu'**il comprend, avant le pressage, une mise en place d'une mousse (400) ou d'un tissu tridimensionnel entre la première face (210) de la pièce (200) et la pièce de revêtement.

7. Procédé de couverture selon la revendication 6, **caractérisé en ce qu'**il comprend une formation d'une cuvette (213) formant un creux dans la première face (210) de la pièce (200), la cuvette (213) présentant une profondeur inférieure à une épaisseur de la mousse (400), pour loger la mousse.

8. Procédé de couverture selon la revendication 7, **caractérisé en ce qu'**il comprend une formation d'une nervure (214) en saillie de la première face (210) de la pièce (200), aux fins de délimiter l'emplacement de la mousse.

## Patentansprüche

1. Verfahren zur Verkleidung eines Fahrzeuginnenraumelements eines Fahrzeugs (200) mit zwei Seiten, umfassend Befestigen eines Fahrzeuginnenraumelements (200) an einen ersten Teil (110) einer Presse (100), Anordnen eines Verkleidungsteils (300) auf einem zweiten Teil (120) der Presse (100) und Pressen einer ersten Seite (210) des Fahrzeuginnenraumelements (200) und des Verkleidungsteils (300) gegeneinander, wobei das Verfahren **dadurch gekennzeichnet ist, dass** es beim Pressen ein Spannen des Verkleidungsteils (300) auf der ersten Seite durch eine Lippe (122) des zweiten Teils (120) der Presse und ein Blockieren des Verkleidungsteils gegenüber dem Fahrzeuginnenraumelement durch Anwenden des Umrisses des Verkleidungsteils auf einen Klebstoff, getragen von der zweiten Seite des Teils, umfasst, wobei die Lippe (122) eine im Allgemeinen längliche Ringform darstellt, die auf einem Scheitel des Fahrzeuginnenraumelements (200) ermöglicht, dieselbe zu überschreiten, indem sie in ihrem Inneren gequert wird.

2. Verfahren zur Verkleidung nach Anspruch 1, **dadurch gekennzeichnet, dass** die Verkleidung ein Textil oder ein Gewebe, verstärkt durch Kunststoff, ist.

3. Verfahren zur Verkleidung nach Anspruch 1 oder 2, **dadurch gekennzeichnet, dass** der Klebstoff vom Umfang der zweiten Seite des Teils getragen wird.

4. Verfahren zur Verkleidung nach einem der Ansprüche 1 bis 3, **dadurch gekennzeichnet, dass** das Blockieren des Verkleidungsteils gegenüber dem Fahrzeuginnenraumelement durch das Anbringen von Ultraschallschweißpunkten oder das Anbringen von Klebepunkten erzielt wird, vor der das Verkleidungsteil durch Ablösen und erneutes Kleben neu positioniert werden kann.

5. Verfahren zur Verkleidung nach einem der Ansprüche 1 bis 4, **dadurch gekennzeichnet, dass** die Lippe aus Polyurethan oder aus Kautschuk ist.

6. Verfahren zur Verkleidung nach einem der Ansprüche 1 bis 5, **dadurch gekennzeichnet, dass** es vor dem Pressen ein Anbringen eines Schaums (400) oder eines dreidimensionalen Gewebes zwischen der ersten Seite (210) des Teils (200) und dem Verkleidungsteil umfasst.

7. Verfahren zur Verkleidung nach Anspruch 6, **dadurch gekennzeichnet, dass** es das Bilden eines Beckens (213) umfasst, das einen Hohlraum in der ersten Seite (210) des Teils (200) bildet, wobei das Becken (213) eine untere Tiefe darstellt, die kleiner als eine Dicke des Schaums (400) ist, um den Schaum aufzunehmen.

8. Verfahren zur Verkleidung nach Anspruch 7, **dadurch gekennzeichnet, dass** es das Bilden einer Rippe (214) umfasst, die von der ersten Seite (210) des Teils (200) hervorsteht, mit dem Ziel, den Standort der Schaums zu begrenzen.

## Claims

1. A method of covering a two-sided passenger compartment part (200) of a motor vehicle, comprising attaching the passenger compartment part (200) to a first portion (110) of a press (100), arranging a covering part (300) on a second portion (120) of the press (100), and pressing a first face (210) of the passenger compartment part (200) and the covering part (300) against one another, the method being **characterized in that** it comprises, during pressing, tensioning of the covering part (300) on the first face by a lip (122) of the second part (120) of the press, and immobilizing the covering part with respect to the passenger compartment part by applying the outline of the covering part to an adhesive carried by the second face of the part, the lip (122) having a generally oblong annular shape allowing a vertex of the passenger compartment part (200) to go beyond it, by crossing it inside.

2. The covering method according to claim 1, **characterized in that** the covering is a plasticcoated textile or fabric.

3. The covering method according to claim 1 or 2, **characterized in that** the adhesive is carried by the periphery of the second face of the part.

4. The covering method according to one of claims 1 to 3, **characterized in that** the immobilization of the covering part with respect to the passenger compartment part is continued by applying ultrasonic welding points or by applying glue dots, before which the covering part can be repositioned by ungluing and regluing.

5. The covering method according to one of claims 1 to 4, **characterized in that** the lip is made of polyurethane or rubber.

6. The covering method according to one of claims 1 to 5, **characterized in that** it comprises, before pressing, placing a foam (400) or a three-dimensional fabric between the first face (210) of the part (200) and the covering part.

7. The covering method according to claim 6, **characterized in that** it comprises forming a basin (213) forming a hollow in the first face (210) of the part (200), the basin (213) having a depth less than a foam thickness (400), to accommodate the foam.

8. The covering method according to claim 7, **characterized in that** it comprises forming a rib (214) projecting from the first face (210) of the part (200), for the purpose of delimiting the location of the foam.
